# EUROPÄISCHE PATENTSCHRIFT

(11) **EP 4 257 421 B1**
(45) Veröffentlichungstag und Bekanntmachung des Hinweises auf die Patenterteilung: **11.06.2025**
(21) Anmeldenummer: 23166922.7
(22) Anmeldetag: 06.04.2023
(51) Int. Cl.: B60N 2/00, B60N 2/68, B60N 2/70

(54) **FAHRZEUGSITZ**
VEHICLE SEAT
SIEGE DE VEHICULE

(30) Priorität: 08.04.2022 DE 102022203551; 08.09.2022 DE 102022209377
(43) Veröffentlichungstag der Anmeldung: 11.10.2023
(73) Patentinhaber: Adient US LLC, Plymouth, MI 48170 (US)
(72) Erfinder: DILLINGER, Thomas, 40880 Ratingen (DE)
(74) Vertreter: Liedtke & Partner Patentanwälte

(56) Entgegenhaltungen:
- EP-A1- 2 862 747
- EP-A2- 1 177 935
- DE-A1- 102009 059 975
- US-A1- 2011 266 857

## Beschreibung

Die Erfindung betrifft einen Fahrzeugsitz, umfassend mindestens einen Rahmen, der eine äußere Kontur des Fahrzeugsitzes bildet, wobei auf einer Vorderseite des Fahrzeugsitzes am Rahmen eine Sitzschale angeordnet ist.

### Stand der Technik

Aus dem Stand der Technik sind Fahrzeugsitze allgemein bekannt, welche eine Tragstruktur umfassen, auf welche Polsterelemente oder Schalenelemente angeordnet sind.

In der DE 10 2009 017 375 A1 werden beispielsweise ein Verfahren zur Herstellung einer Stützstruktur für einen Fahrzeugsitz und ein Fahrzeugsitz mit einer solchen Stützstruktur beschrieben. Der Fahrzeugsitz umfasst mindestens eine Sitzschale für das Sitzteil oder/und die Rückenlehne des Fahrzeugsitzes. Im Verfahren werden ein Blechteil und mindestens eine Profilleiste bereitgestellt. Die Profilleiste wird an dem Blechteil unter Ausbildung der Sitzschale randseitig befestigt.

Aus der DE 10 2021 102 229 A1 ist ein Schaumteil für einen Fahrzeugsitz bekannt, wobei eine Textilschicht als eine dreidimensional geformte Vliesschicht ausgebildet ist. Aus der DE 10 2018 206 164 A1 ist ein Sitzschaumstoffteil und ein Sitzelement bekannt, wobei das Schaumstoffteil mit einer Anzahl von flexiblen Stützelementen versehen ist. US 2011/0266857 A1 offenbart einen Sitz mit einem netzähnlichen Textil. EP 2 862 747 A1 offenbart einen Sitz mit gurtähnlichen Stützeinheiten. Aus der DE 10 2009 059 975 A1 ist eine Sitzstruktur aus einem formstabilen Vliesstoff bekannt.

### Aufgabe

Aufgabe der vorliegenden Erfindung ist es, einen gegenüber dem Stand der Technik verbesserten Fahrzeugsitz anzugeben.

Die Aufgabe wird erfindungsgemäß gelöst mit einem Fahrzeugsitz, der die Merkmale des Anspruchs 1 aufweist.

### Lösung

Ein erfindungsgemäßer Fahrzeugsitz umfasst einen Rahmen, der eine äußere Kontur des Fahrzeugsitzes bildet, wobei auf einer Vorderseite des Fahrzeugsitzes am Rahmen eine Sitzschale angeordnet ist, wobei die Sitzschale aus einem, insbesondere hochbelastbaren, thermisch verfestigten Vliesstoff gebildet ist, wobei mindestens ein Verstärkungselement oder eine Verstärkung an einer vorderen Sitzkante und an einem oberen Sitzende am Rahmen befestigt ist und wobei das Verstärkungselement oder die Verstärkung sich zwischen der vorderen Sitzkante und dem oberen Sitzende zumindest mit einem Abschnitt auf einer Vorderseite der Sitzschale und mit mindestens einem weiteren Abschnitt auf einer Rückseite der Sitzschale erstreckt.

Die mit der Erfindung erzielten Vorteile bestehen insbesondere darin, dass ein solcher Fahrzeugsitz mit einem Rahmen und einer an diesem befestigten Sitzschale und einem sich über die Sitzschale in Längsrichtung erstreckenden Verstärkungselement in besonders einfacher Weise kostengünstig herzustellen ist, eine hohe Formstabilität und Steifigkeit aufweist und besonders gut mechanischen Belastungen widersteht und ein besonders geringes Eigengewicht hat sowie besonders dünn ausgebildet ist.

Als Verstärkungselement oder Verstärkung kann beispielsweise ein Gurt, ein Band oder ein Netz vorgesehen, insbesondere in dem Vliesstoff integriert sein.

Vorteilhafte Ausgestaltungen, welche einzeln oder in Kombination miteinander eingesetzt werden können, sind Gegenstand der Unteransprüche.

Der, insbesondere hochbelastbare, thermisch verfestigte Vliesstoff, ein sogenanntes Thermofleece oder Thermofelt, weist insbesondere ein Flächengewicht von 900 g/m² bis 1800 g/m², beispielsweise mehr als 1100 g/m² auf. Hierdurch ergibt sich gegenüber einer Plastiksitzschale ein verbessertes Nutzererlebnis. Durch die Form der Sitzschale wird eine mit dem Nutzer in Kontakt befindliche Oberfläche maximiert. Die Sitzschale weist insbesondere eine an die Körperform eines Sitzbenutzers angepasste dreidimensionale Form, insbesondere eine entsprechende Oberflächenkontur, auf. Die Sitzschale kann bereichsweise verstärkt ausgebildet sein. Beispielsweise weist die Sitzschale aus dem thermisch verfestigten Vliesstoff eine Schalendicke von einigen Millimetern, insbesondere in einem Bereich zwischen 2 mm bis 5 mm auf.

Die Sitzschale aus dem thermisch verfestigten Vliesstoff ist insbesondere formstabil, zum Beispiel weitgehend biegesteif und/oder dehnsteif, ausgebildet. Die an dem Rahmen angeordnete, insbesondere befestigte, Sitzschale und der Rahmen bilden gemeinsam eine Tragstruktur des Fahrzeugsitzes.

Die Demontage und das Recycling des Fahrzeugsitzes werden durch die erfindungsgemäße Gestaltung des Fahrzeugsitzes erleichtert. Der thermisch verfestigte Vliesstoff kann beispielsweise zu etwa 70% bis 100% recyceltes Polyethylen enthalten und ist sehr leicht. Dadurch wird auch der Fahrzeugsitz insgesamt sehr leicht.

Das Verstärkungselement, insbesondere ein Band, Netz oder Gurt, und/oder der Rahmen können in unterschiedlichen Farben gestaltet sein, insbesondere in einer Farbe, die sich von einer Farbe der Sitzschale unterscheidet.

Eine Weiterbildung der Erfindung sieht vor, dass der Rahmen eine äußere Kontur sowohl einer Rückenlehne als auch eines Sitzteils des Fahrzeugsitzes und eines Kopfstützenbereiches bildet. Die äußere Kontur des Rahmens weist insbesondere eine dreidimensionale Form auf. Insbesondere können/kann die Sitzschale und/oder der Rahmen der Kontur des Körpers einer sitzenden Person angepasst sein.

Die Sitzschale kann insbesondere einteilig ausgebildet sein. Beispielsweise kann die Sitzschale durchgehend ein Sitzteil, eine Rückenlehne und einen Kopfstützenbereich des Fahrzeugsitzes bilden. Eine solche Sitzschale ist einfach sowie kostengünstig herstellbar und weist ein besonders geringes Gewicht und eine geringe Dicke auf.

In einem möglichen Ausführungsbeispiel umschlingt die Sitzschale den Rahmen zumindest teilweise und/oder weist Wangen an den Seiten des Sitzteils und/oder an einer vorderen Sitzkante auf. Die Sitzschale kann beispielsweise auf den Rahmen aufgelegt und durch Teilumschlingung des Rahmens befestigt sein. Hierdurch kann die Sitzschale gegen seitliches Verrutschen auf dem Rahmen gesichert sein. Beispielsweise kann die Sitzschale im Randbereich auch durch Falzen, insbesondere Umfalzen oder Randfalzen, an dem Rahmen befestigt sein. Eine solche Befestigung der Sitzschale an dem Rahmen erhöht die Stabilität des Fahrzeugsitzes. Zudem ist in den Randbereichen die Verletzungsgefahr durch scharfe Kanten verringert.

Ferner können seitliche Bereiche der Sitzschale im Bereich der Rückenlehne und/oder des Sitzteils zur Verbesserung des Seitenhalts nach vorn gewölbt ausgebildet sein.

In einer Ausführungsform weist die Sitzschale einen oder mehrere Durchbrüche auf. Die Durchbrüche dienen insbesondere einer Körperkonturanpassung und einer Belüftung der Sitzschale, insbesondere einer Luftdurchlässigkeit.

Beispielsweise können mehrere bogenförmige Durchbrüche im Bereich der Rückenlehne angeordnet sein, derart, dass in der Sitzschale mehrere in der Vertikalrichtung nach unten weisende Lappen entstehen, wobei ein in der Vertikalrichtung oberer Lappen jeweils in den Bereich eines in der Vertikalrichtung darunterliegenden Lappens reicht.

Zusätzlich oder alternativ können mehrere bogenförmige Durchbrüche im Bereich des Sitzteils angeordnet sein, derart, dass in der Sitzschale mehrere zur Rückenlehne weisende Lappen entstehen, wobei ein einer vorderen Sitzkante näherer Lappen jeweils in den Bereich eines der Rückenlehne näheren Lappens reicht.

Zusätzlich oder alternativ kann je ein Durchbruch zentral an der vorderen Sitzkante und zentral an einem oberen Sitzende innerhalb des Bereichs des Rahmens vorgesehen sein.

Darüber hinaus kann eine Heizvorrichtung an der Sitzschale angeordnet und/oder darin integriert.

Beispielsweise ist das Verstärkungselement, insbesondere ein Gurt, Band oder Netz, durch zumindest einige der Durchbrüche geführt, so dass das Verstärkungselement alternierend auf einer Vorderseite und auf der Rückseite der Sitzschale liegt. Das Verstärkungselement kann sich beispielsweise zumindest überwiegend auf einer Rückseite der Sitzschale erstrecken.

Am Rahmen, beispielsweise seitlich an der Rückenlehne, insbesondere im Lordosenbereich, kann ein Airbag-Modul angeordnet sein. Das Airbag-Modul umfasst beispielsweise eine Halterung, einen Zünder, der an der Halterung befestigt ist, beispielsweise mittels Gewindebolzen am Zünder und Muttern, einen Airbag sowie eine Airbag-Abdeckung. Die Airbag-Abdeckung kann ebenfalls aus einem thermisch verfestigten Vliesstoff gebildet sein.

Der Rahmen kann im Bereich des Sitzteils auf jeder Seite an einer Stütze befestigt sein, die zumindest weitgehend senkrecht ausgerichtet ist. Jede Stütze ist an einem ersten Schienenelement befestigt, das im Eingriff mit einem zweiten Schienenelement steht oder stehen kann, welches an einem Fahrzeug befestigt ist.

Ein weiteres Ausführungsbeispiel sieht vor, dass der Rahmen als ein Rohrrahmen ausgebildet ist. Beispielsweise weist der Rahmen im Bereich einer Rückenlehne und eines Sitzteils ein gebogenes erstes Rohr auf, wobei der Rahmen in einem Kopfstützenbereich oben an den Bereich der Rückenlehne anschließend ein gebogenes zweites Rohr aufweist, das in das erste Rohr eingesteckt und damit lösbar oder nicht lösbar verbunden ist.

Anstelle der einteiligen Sitzschale kann die Sitzschale auch mehrteilig ausgebildet sein. Beispielsweise kann die Sitzschale eine Rückenlehne, ein Sitzteil und einen Kopfstützenbereich des Fahrzeugsitzes als voneinander abgesetzte Abschnitte umfassen, die untereinander durch Verbindungsabschnitte verbunden sind.

Das Verstärkungselement kann beispielsweise als ein Gurt, Band oder Netz ausgebildet sein. Der Gurt oder das Band oder das Netz ist insbesondere als ein Spannelement oder Stützelement ausgebildet, das zum Beispiel mit einem Ende an einer Rückseite der vorderen Sitzkante und mit dem anderen Ende an einer Rückseite des oberen Sitzendes befestigt ist und eine Bewegung in Längsausdehnung der Sitzschale stützt, insbesondere reguliert. Insbesondere ist das Verstärkungselement als Spannelement zwischen der vorderen Sitzkante und dem oberen Sitzende gespannt. Das als Gurt oder Band ausgebildete Verstärkungselement ist beispielsweise als ein Elastomerband, ein flexibles Stützband, ein Federelement und/oder ein gurtförmiges oder bandförmiges Dämpfungselement ausgebildet. Der Gurt oder das Band ist insbesondere als ein Längsband in die Sitzschale eingearbeitet, eingefädelt oder integriert. Zusätzlich kann mindestens ein Querband oder ein Quergurt in die Sitzschale eingearbeitet, eingefädelt oder integriert sein. Das Verstärkungselement, insbesondere ein Gurt, Band oder Netz, ist beispielsweise aus einem Gewebe, einem Kunststoff oder einem Textil gebildet. Beispielsweise kann das Verstärkungselement aus einem gewebten Stoff oder Fasern, wie zum Beispiel Textilfasern und/oder Kunststofffasern, gebildet sein. Zusätzlich können Stützfasern oder Verstärkungsfasern, wie zum Beispiel Metallfasern und/oder Kohlefasern und/oder thermoplastische Kunststofffasern, integriert sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Figur 1: in schematischer Darstellung einen Fahrzeugsitz mit einer Längsverstelleinrichtung nach dem Stand der Technik,
- Figur 2: eine schematische Ansicht eines Fahrzeugsitzes mit einem Rahmen und einer Sitzschale,
- Figur 3: eine weitere schematisch Ansicht eines Fahrzeugsitzes,
- Figur 4: eine schematische Ansicht des Rahmens ohne die Sitzschale,
- Figur 5: eine schematische Explosionsdarstellung des Rahmens,
- Figur 6: eine schematische Ansicht einer alternativen Ausführungsform des Fahrzeugsitzes,
- Figur 7: eine schematische Ansicht einer alternativen Ausführungsform der durchgehenden Sitzschale,
- Figur 8: eine schematische Detailansicht des Rahmens mit einem daran befestigten Airbag-Modul,
- Figur 9: eine Explosionsdarstellung des Airbag-Moduls,
- Figur 10: eine schematische Detailansicht des Rahmens mit einem beispielsweise als Gurt ausgebildeten Verstärkungselement an einem oberen Sitzende, und
- Figur 11: eine schematische Detailansicht des Rahmens mit dem als Gurt ausgebildeten Verstärkungselement an einer vorderen Sitzkante.

Einander entsprechende Teile sind in allen Figuren mit den gleichen Bezugszeichen versehen.

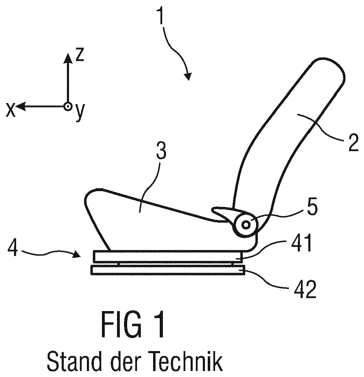

Ein in der Figur 1 zum Stand der Technik schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z vorzugsweise parallel zu einer Fahrzeughochachse.

Die verwendeten Positionsangaben und Richtungsangaben, wie beispielsweise vorne, hinten, oben und unten, beziehen sich auf eine Blickrichtung eines im Fahrzeugsitz 1 sitzenden Insassen in normaler Sitzposition, wobei der Fahrzeugsitz 1 im Fahrzeug eingebaut und in einer zur Personenbeförderung geeigneten Gebrauchsposition mit aufrecht stehender Rückenlehne 2 und wie üblich in Fahrtrichtung ausgerichtet ist. Der Fahrzeugsitz 1 kann jedoch auch in abweichender Ausrichtung, beispielsweise quer zur Fahrtrichtung, verbaut oder bewegt werden.

Die Rückenlehne 2 kann schwenkbar an einem Sitzteil 3 des Fahrzeugsitzes 1 angeordnet sein. Hierzu kann der Fahrzeugsitz 1 einen Beschlag 5, insbesondere einen Drehbeschlag, wie zum Beispiel einen Rastbeschlag oder Taumelbeschlag, umfassen.

Der Fahrzeugsitz 1 kann eine Längsverstelleinrichtung 4, insbesondere eine Schienenanordnung mit einem ersten Schienenelement 41 und einem zweiten Schienenelement 42, umfassen. Das erste Schienenelement 41 ist relativ in Längsrichtung x zum zweiten Schienenelement 42 verstellbar. Das erste Schienenelement 41 ist an dem Sitzteil 3 befestigt. Das zweite Schienenelement 42 ist an einem Strukturelement eines Fahrzeugs, zum Beispiel einem Fahrzeugboden, befestigt.

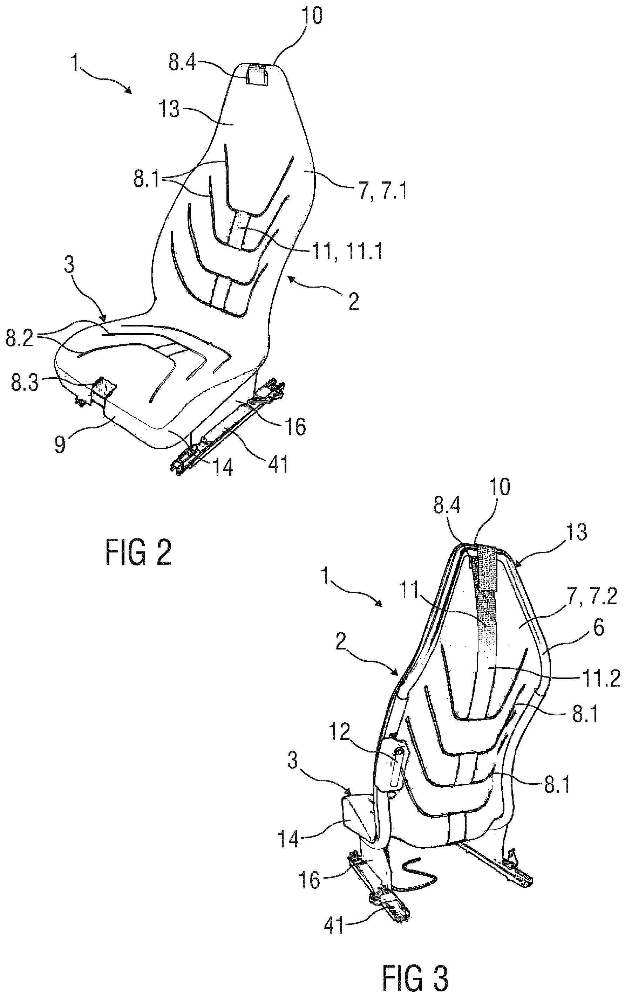

Figuren 2 und 3 sind schematische Ansichten eines Fahrzeugsitzes 1. Der Fahrzeugsitz 1 weist einen Rahmen 6 auf, der eine äußere Kontur des Fahrzeugsitzes 1, insbesondere sowohl der Rückenlehne 2 als auch des Sitzteils 3 und optional eines Kopfstützenbereiches 13, bildet, insbesondere vollständig bildet.

Auf einer Vorderseite des Fahrzeugsitzes 1 ist auf dem Rahmen 6 eine Sitzschale 7 angeordnet und mit dem Rahmen 6 verbunden. In einem ersten Ausführungsbeispiel umschlingt ein Rand der Sitzschale 7 den Rahmen 6 bereichsweise oder vollständig. In einem zweiten Ausführungsbeispiel kann der Rand der der Sitzschale 7 mittels Randfalzen oder Umfalzen an den Rahmen 6 befestigt sein. Die Sitzschale 7 kann den Rahmen 6 in einem dritten Ausführungsbeispiel zumindest teilweise umschlingen und ferner Wangen 14 an den Seiten des Sitzteils 3 und/oder an einer vorderen Sitzkante 9 aufweisen. Ferner können seitliche Bereiche der Sitzschale 7 im Bereich der Rückenlehne 2 und/oder des Sitzteils 3 zur Verbesserung des Seitenhalts nach vorn gewölbt ausgebildet sein.

Die Sitzschale 7 kann der Kontur des Körpers einer sitzenden Person angepasst sein. Auch kann der Rahmen 6 der Kontur des Körpers einer sitzenden Person angepasst sein.

Insbesondere kann die Sitzschale 7 durchgehend das Sitzteil 3, die Rückenlehne 2 und den Kopfstützenbereich 13 bilden.

Die Sitzschale 7 ist insbesondere aus einem, insbesondere hochbelastbaren, thermisch verfestigten Vliesstoff, einem sogenannten Thermofleece oder Thermofelt, gebildet. Beispielsweise ist der thermisch verfestigte Vliesstoff (auch thermisch gebundenes Vlies genannt) aus Fasern, insbesondere Kunststofffasern, zum Beispiel thermoplastische Fasern und/oder anderen Fasern mit Hilfe von Thermoplasten und/oder Bindefasern, gebildet, die durch Einfluss von Hitze verfestigt, insbesondere miteinander verklebt, werden. Die thermische Aktivierung kann beispielsweise mittels Heißluft oder Kalander erfolgen. Der Vliesstoff kann auch partiell verfestigt sein, zum Beispiel um eine Umrandung des Rahmens 6 zu ermöglichen. Der Vliesstoff kann insbesondere mittels Ultraschall partiell verschweißt werden. Mittels solcher thermischer Verfestigung wird die Bindefestigkeit des Vliesstoffs beträchtlich erhöht und es können leichtere Vliesstoffe hergestellt werden. Die Festigkeit des thermisch verfestigten Vliesstoffs hängt beispielsweise vom Polymertyp und von Herstellungsparametern, wie zum Beispiel Thermobondierbedingungen, ab.

Beispielsweise weist der thermisch verfestigte Vliesstoff ein Flächengewicht von 900 g/m² bis 1800 g/m², beispielsweise mehr als 1100 g/m², auf. Hierdurch ergibt sich gegenüber einer Plastiksitzschale ein verbessertes Nutzererlebnis. Durch die Form der Sitzschale 7 wird eine mit dem Nutzer in Kontakt befindliche Oberfläche maximiert.

Der Vliesstoff kann beispielsweise aus einem Polymermaterial, insbesondere aus Polyester, Polypropylen oder bevorzugt aus Polyethylen, oder aus Naturfasern, insbesondere Wolle, gebildet sein. Der Vliesstoff kann beispielsweise chemisch oder thermisch verfestigt, vernadelt oder wasserstrahlverfestigt sein. Der Vliesstoff ist insbesondere hydrophil oder hydrophob, antistatisch, ölabweisend und/oder flammhemmend ausgebildet.

Die Sitzschale 7 kann einen oder mehrere Durchbrüche 8.1, 8.2, 8.3, 8.4 aufweisen, die der Belüftung dienen können. In der gezeigten Ausführungsform sind mehrere bogenförmige Durchbrüche 8.1 im Bereich der Rückenlehne 2 angeordnet, derart, dass in der Sitzschale 7 mehrere in der Vertikalrichtung Z nach unten weisende Lappen entstehen, wobei ein in der Vertikalrichtung Z oberer Lappen jeweils in den Bereich eines in der Vertikalrichtung Z darunterliegenden Lappens reicht. Ferner sind mehrere bogenförmige Durchbrüche 8.2 im Bereich des Sitzteils 3 angeordnet, derart, dass in der Sitzschale 7 mehrere zur Rückenlehne 2 weisende Lappen entstehen, wobei ein einer vorderen Sitzkante 9 näherer Lappen jeweils in den Bereich eines der Rückenlehne 2 näheren Lappens reicht.

Ferner ist je ein Durchbruch 8.3, 8.4 zentral an der vorderen Sitzkante 9 und zentral an einem oberen Sitzende 10 innerhalb des Bereichs des Rahmens 6 vorgesehen.

Darüber hinaus kann eine Heizvorrichtung an der Sitzschale 7 angeordnet und/oder darin integriert sein.

Mindestens ein Verstärkungselement 11, insbesondere ein zentrales Verstärkungselement 11, ist an der vorderen Sitzkante 9 und am oberen Sitzende 10 am Rahmen 6 befestigt. Das Verstärkungselement 11 ist beispielsweise ein Gurt, Band oder ein Netz.

Im Weiteren wird zur besseren Übersichtlichkeit die Erfindung anhand eines als Gurt ausgebildeten Verstärkungselements 11 beschrieben und als Gurt 11 bezeichnet. Die nachfolgende Beschreibung gilt für ein Band oder Netz als Verstärkungselement 11 analog.

Der Gurt 11 erstreckt sich zwischen der vorderen Sitzkante 9 und dem oberen Sitzende 10 zumindest mit einem ersten Abschnitt 11.1 auf einer Vorderseite 7.1 der Sitzschale 7 (dargestellt in Figur 2) und mit mindestens einem zweiten Abschnitt 11.2 auf einer Rückseite 7.2 der Sitzschale 7 (dargestellt in Figur 3).

Der Gurt 11 ist durch die Durchbrüche 8.1, 8.2, 8.3, 8.4 geführt, so dass der Gurt 11 alternierend auf der Vorderseite 7.1 und auf der Rückseite 7.2 der Sitzschale 7 liegt. Dabei kann der Gurt 11 überwiegend auf der Rückseite 7.2 der Sitzschale 7 verlaufen, insbesondere im Bereich von der Vorderseite 7.1 der Sitzschale 7 aus betrachtet konkaver Wölbungen. Auf diese Weise ergibt sich eine weiche und robuste Unterstützung der Form der Sitzschale 7 und einer darin sitzenden Person.

Der Gurt 11 kann in unterschiedlichen Farben gestaltet sein, insbesondere in einer Farbe, die sich von einer Farbe der Sitzschale 7 unterscheidet.

Der Gurt 11 ist insbesondere als ein Spannelement oder Stützelement ausgebildet, das zum Beispiel mit einem Ende an der Rückseite 7.2 der vorderen Sitzkante 9 der Sitzschale 7 und mit dem anderen Ende an der Rückseite 7.2 des oberen Sitzendes 10 der Sitzschale 7 befestigt ist und eine Bewegung in Längsausdehnung der Sitzschale 7 stützt, insbesondere reguliert. Insbesondere ist der Gurt 11 als ein Spannelement zwischen der vorderen Sitzkante 9 und dem oberen Sitzende 10 gespannt. Der Gurt 11 ist beispielsweise als ein Elastomerband, ein flexibles Stützband ein Federelement und/oder ein Dämpfungselement ausgebildet. Der Gurt 11 ist insbesondere als ein Längsband in die Sitzschale 7 eingearbeitet, eingefädelt oder integriert.

Zusätzlich kann ein viskoelastischer Dämpfer (nicht dargestellt) vorgesehen sein, beispielsweise auf der Rückseite 7.2 der Sitzschale 7. Am Rahmen 6, beispielsweise seitlich an der Rückenlehne 2, insbesondere im Lordosenbereich, kann ein Airbag-Modul 12 angeordnet sein.

Der Rahmen 6 kann ebenfalls der Kontur des Körpers einer sitzenden Person angepasst und somit ergonomisch ausgebildet sein. Der Rahmen 6 kann in unterschiedlichen Farben gestaltet sein, insbesondere in einer Farbe, die sich von einer Farbe der Sitzschale 7 unterscheidet.

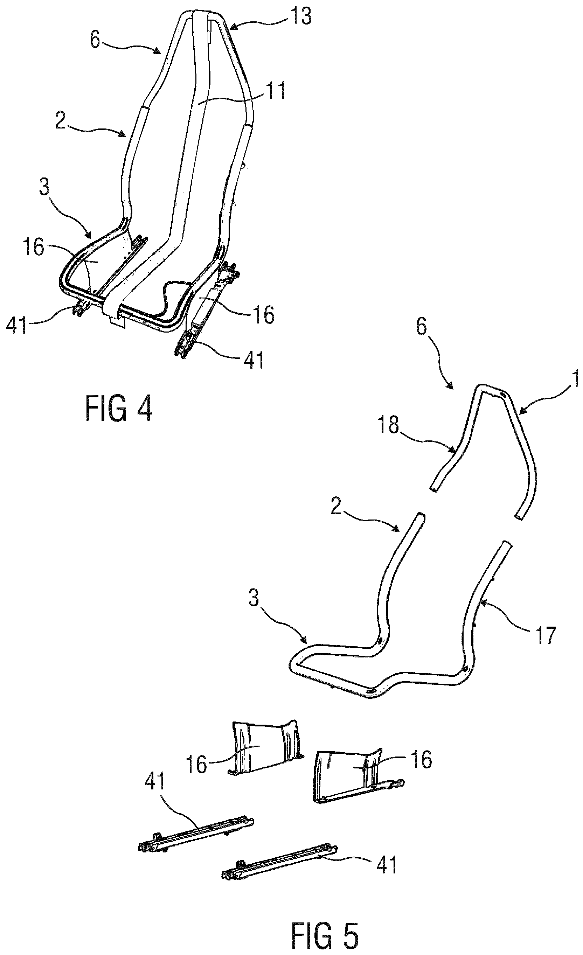

Figur 4 ist eine schematische Ansicht des Rahmens 6 ohne die Sitzschale 7. Der Rahmen 6 ist im Bereich des Sitzteils 3 auf jeder Seite an einer Stütze 16 befestigt, die zumindest weitgehend senkrecht ausgerichtet ist. Jede Stütze 16 ist an einem ersten Schienenelement 41 befestigt, das im Eingriff mit einem zweiten Schienenelement 42 steht oder stehen kann, welches an einem Fahrzeug befestigt ist. Der Rahmen 6, die Stützen 16 und das erste Schienenelement 41 und/oder das zweite Schienenelement 42 sind insbesondere aus Metall, beispielsweise Stahl, gebildet.

Figur 5 ist eine schematische Explosionsdarstellung des Rahmens 6, der Stützen 16 und der ersten Schienenelemente 41. Der Rahmen 6 ist beispielsweise ein Rohrrahmen.

Der Rahmen 6 kann beispielsweise im Bereich der Rückenlehne 2 und des Sitzteils 3 ein gebogenes erstes Rohr 17, insbesondere mit einem Außendurchmesser von 32 mm und einer Wandstärke von 1,5 mm aufweisen. Im Kopfstützenbereich 13 oben an den Bereich der Rückenlehne 2 anschließend kann der Rahmen 6 ein gebogenes zweites Rohr 18, insbesondere mit einem Außendurchmesser von 25 mm und einer Wandstärke von 1,5 mm aufweisen, das in das erste Rohr 17 eingesteckt und damit lösbar oder nicht lösbar verbunden sein kann. Die Rohre 17, 18 können Befestigungsmittel, beispielsweise Bolzen, Zapfen, Gewindebolzen und/oder Gewindebohrungen aufweisen, beispielsweise zur Befestigung des Airbag-Moduls 12, des Gurts 11 und/oder der Sitzschale 7.

Das erste Rohr 17 kann beispielsweise eine Masse von etwa 2,6 kg aufweisen. Das zweite Rohr 18 kann beispielsweise eine Masse von etwa 0,9 kg aufweisen. Die Stützen 16 können beispielsweise eine Masse von 2,4 kg aufweisen. Die ersten Schienenelemente 41 und/oder die zweiten Schienenelemente 42 können beispielsweise eine Masse von 3 kg aufweisen.

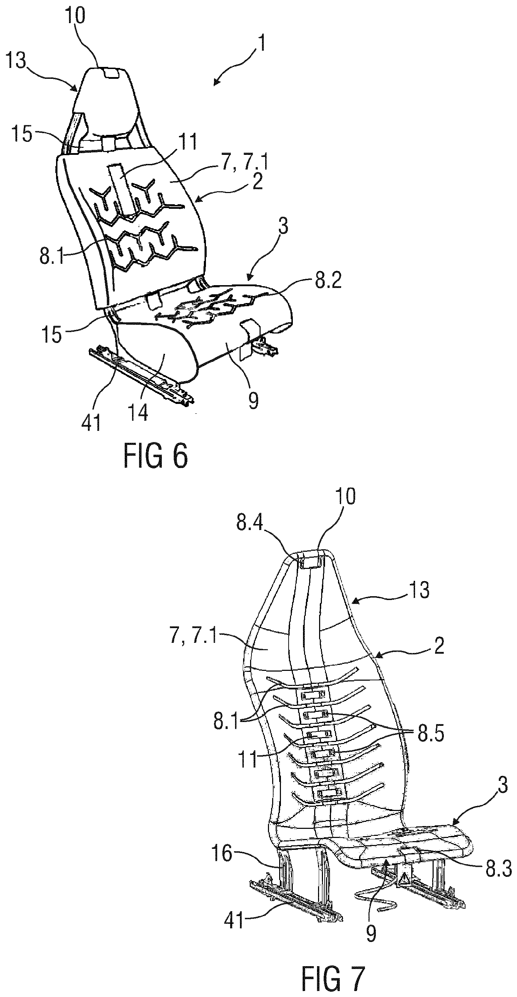

Figur 6 ist eine schematische Ansicht einer alternativen Ausführungsform des Fahrzeugsitzes 1. In diesem Fall sind statt einer durchgehenden Sitzschale 7 die Rückenlehne 2, das Sitzteil 3 und der Kopfstützenbereich 13 als voneinander abgesetzte Abschnitte einer Sitzschale 7 gebildet, die untereinander durch Verbindungsabschnitte 15 dennoch verbunden sein können. Die Verbindungsabschnitte 15 können jedoch zurückgesetzt sein, so dass sie nicht mit einer auf dem Fahrzeugsitz 1 sitzenden Person in Kontakt kommen. Der in Figur 6 gezeigte Fahrzeugsitz 1 zeigt außerdem Durchbrüche 8 in der Sitzschale 7, die eine alternative Form aufweisen.

Figur 7 ist eine schematische Ansicht einer alternativen Ausführungsform der durchgehenden Sitzschale 7. In der gezeigten Ausführungsform sind mehrere Durchbrüche 8.1 im Bereich der Rückenlehne 2 in Form von weitgehend geraden oder nur leicht nach unten gewölbten, parallelen Streifen angeordnet. In gleicher Weise können Durchbrüche 8.2 im Bereich des Sitzteils 3 angeordnet sein.

Ferner ist je ein Durchbruch 8.3, 8.4 zentral an der vorderen Sitzkante 9 und zentral an einem oberen Sitzende 10 innerhalb des Bereichs des Rahmens 6 vorgesehen. Darüber hinaus können zentrale Durchbrüche 8.5 zur Durchführung des Gurts 11 in der Rückenlehne 2 und im Sitzteil 3 angeordnet sein. Der Gurt 11 kann dabei beispielsweise nur alternierend durch die Durchbrüche 8.3, 8.4 und durch die zentralen Durchbrüche 8.5, nicht jedoch durch die Durchbrüche 8.1 und 8.2 geführt sein.

Die Fläche der Sitzschale 7 kann beispielsweise etwa 0,64 m² als Nettositzfläche zur Vorderseite hin und etwa 0,8 m² brutto einschließlich der Teilumschlingungen des Rahmens 6 betragen. Bei einem Flächengewicht von 900 g/m² würde sich so eine Masse der Sitzschale 7 von 610 g ergeben. Bei einem Flächengewicht von 1800 g/m² würde sich so eine Masse der Sitzschale 7 von 1220 g ergeben.

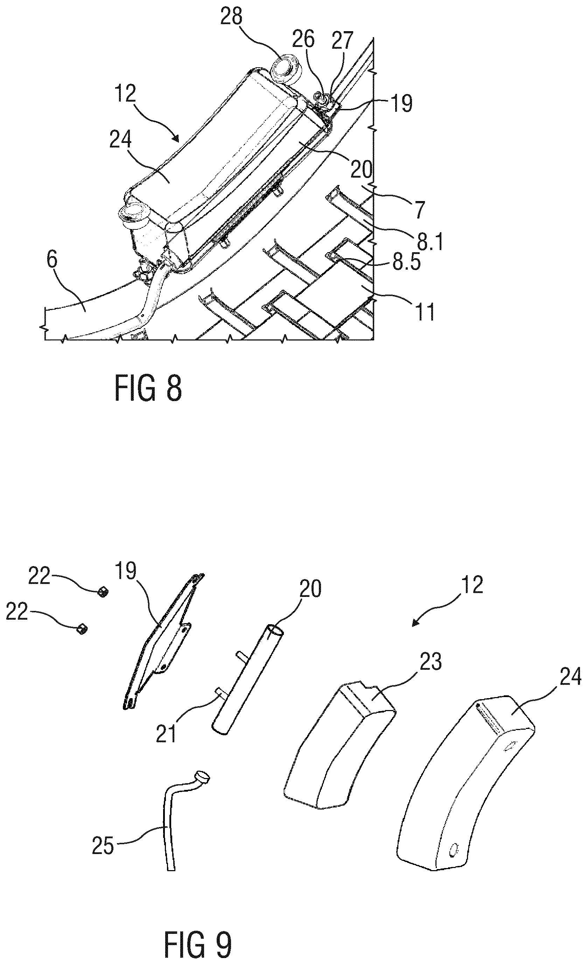

Figur 8 ist eine schematische Detailansicht des Rahmens 6 mit dem daran befestigten Airbag-Modul 12.

Figur 9 ist eine Explosionsdarstellung des Airbag-Moduls 12.

Das Airbag-Modul 12 umfasst eine Halterung 19, einen Zünder 20, der an der Halterung 19 befestigt ist, beispielsweise mittels Gewindebolzen 21 am Zünder 20 und Muttern 22, einen Airbag 23 sowie eine Airbag-Abdeckung 24. Die Airbag-Abdeckung 24 kann aus einem thermisch verfestigten Vliesstoff gebildet sein, insbesondere dem gleichen Material wie die Sitzschale 7. Das Airbag-Modul 12 ist somit robust und sicher geschützt. Ein elektrisches Kabel 25 ist zur elektrischen Kontaktierung des Zünders 20 vorgesehen. Die Halterung 19 kann an Gewindebolzen 26 des Rahmens 6 mittels weiterer Muttern 27 befestigt sein, die mit Abdeckkappen 28 abgedeckt sind.

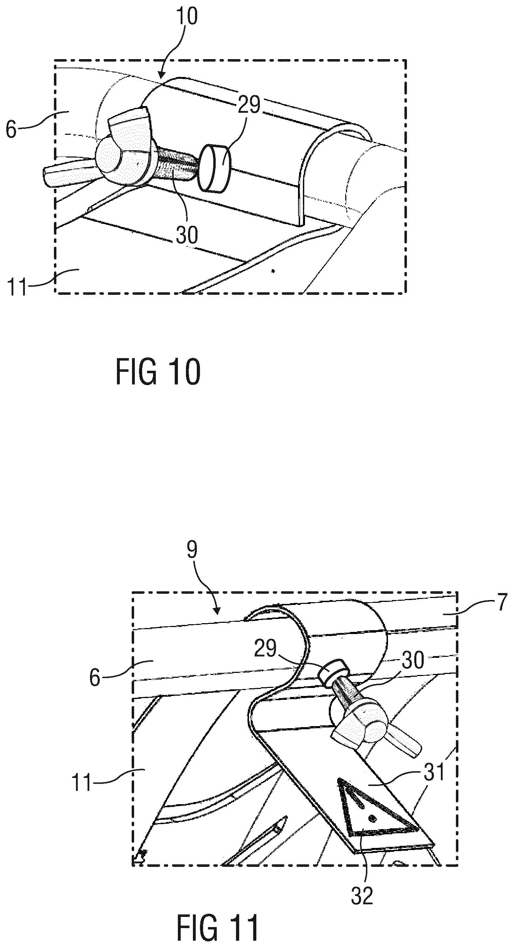

Figur 10 ist eine schematische Detailansicht des Rahmens 6 mit dem Gurt 11 am oberen Sitzende 10. Der Gurt 11 umschlingt den Rahmen 6 am oberen Sitzende 10 teilweise oder vollständig und weist beispielsweise eine Öffnung auf, in die ein Zapfen 29 des Rahmens 6 eingreift. Der Zapfen 29 ist mit einer Gewindebohrung versehen, in die eine Schraube 30 oder ein Bolzen, insbesondere eine Flügelschraube oder eine Sterngriffschraube eingeschraubt werden kann, um das Ende des Gurts 11 am Rahmen 6 zu sichern.

Figur 11 ist eine schematische Detailansicht des Rahmens 6 mit dem Gurt 11 an der vorderen Sitzkante 9. Der Gurt 11 umschlingt den Rahmen 6 an der vorderen Sitzkante 9 teilweise oder vollständig und weist beispielsweise eine Öffnung auf, in die ein Zapfen 29 des Rahmens 6 eingreift. Der Zapfen 29 ist mit einer Gewindebohrung versehen, in die eine Schraube 30 oder ein Bolzen, insbesondere eine Flügelschraube oder eine Sterngriffschraube eingeschraubt werden kann, um das Ende des Gurts 11 am Rahmen 6 zu sichern. Ein Ende des Gurtes 11 kann als herunterhängende Lasche 31 ausgebildet sein, die mit einem Warnsymbol 32 oder Hinweis versehen sein kann.

Beispielsweise kann die Sitzschale 7 auf den Rahmen 6 aufgelegt und durch eine Teilumschlingung des Rahmens 6 gegen seitliches Verrutschen auf dem Rahmen 6 gesichert sein. Die Sitzschale 7 kann durch den mindestens einen Gurt 11 am Rahmen 6 befestigt sein. Der thermisch verfestigte Vliesstoff kann beispielsweise zu etwa 70% recyceltes Polyethylen enthalten und ist sehr leicht. Die Demontage und das Recycling des Fahrzeugsitzes 1 wird durch die dargestellte Gestaltung des Fahrzeugsitzes 1 erleichtert. Insbesondere wird kein Polyurethan verwendet. Ferner muss bei der Herstellung nicht geklebt und nicht überspritzt werden.

### Bezugszeichenliste

- 1: Fahrzeugsitz
- 2: Rückenlehne
- 3: Sitzteil
- 4: Längsverstelleinrichtung
- 41: erstes Schienenelement
- 42: zweites Schienenelement
- 5: Beschlag
- 6: Rahmen
- 7: Sitzschale
- 7.1: Vorderseite der Sitzschale
- 7.2: Rückseite der Sitzschale
- 8, 8.1 bis 8.5: Durchbruch
- 9: vordere Sitzkante
- 10: oberes Sitzende
- 11: Verstärkungselement (Gurt)
- 11.1: erster Abschnitt
- 11.2: zweiter Abschnitt
- 12: Airbag-Modul
- 13: Kopfstützenbereich
- 14: Wange
- 15: Verbindungsabschnitt
- 16: Stütze
- 17: erstes Rohr
- 18: zweites Rohr
- 19: Halterung
- 20: Zünder
- 21: Gewindebolzen
- 22: Mutter
- 23: Airbag
- 24: Airbag-Abdeckung
- 25: Kabel
- 26: Gewindebolzen
- 27: Mutter
- 28: Abdeckkappe
- 29: Zapfen
- 30: Schraube
- 31: Lasche
- 32: Warnsymbol

- X: Längsrichtung
- Y: Querrichtung
- Z: Vertikalrichtung

## Patentansprüche

1. Fahrzeugsitz (1), umfassend mindestens einen Rahmen (6), der eine äußere Kontur des Fahrzeugsitzes (1) bildet, wobei auf einer Vorderseite des Fahrzeugsitzes (1) am Rahmen (6) eine Sitzschale (7) angeordnet ist, wobei die Sitzschale (7) aus einem thermisch verfestigten Vliesstoff gebildet ist, wobei mindestens ein Verstärkungselement (11) an einer vorderen Sitzkante (9) und an einem oberen Sitzende (10) am Rahmen (6) befestigt ist und wobei das Verstärkungselement (11) sich zwischen der vorderen Sitzkante (9) und dem oberen Sitzende (10) zumindest mit einem Abschnitt (11.1) auf einer Vorderseite (7.1) der Sitzschale (7) und mit mindestens einem weiteren Abschnitt (11.2) auf einer Rückseite (7.2) der Sitzschale (7) erstreckt.

2. Fahrzeugsitz (1) nach Anspruch 1, wobei der thermisch verfestigte Vliesstoff ein Flächengewicht von 900 g/m² bis 1800 g/m², insbesondere mehr als 1100 g/m², aufweist.

3. Fahrzeugsitz (1) nach Anspruch 1 oder 2, wobei der thermisch verfestigte Vliesstoff recyceltes Polyethylen mit einem Anteil von 70% bis 100% umfasst.

4. Fahrzeugsitz (1) nach einem der vorhergehenden Ansprüche, wobei der Rahmen (6) eine äußere Kontur sowohl einer Rückenlehne (2) als auch eines Sitzteils (3) des Fahrzeugsitzes (1) und optional eines Kopfstützenbereiches (13) bildet.

5. Fahrzeugsitz (1) nach einem der vorhergehenden Ansprüche, wobei die Sitzschale (7) durchgehend ein Sitzteil (3), eine Rückenlehne (2) und einen Kopfstützenbereich (13) des Fahrzeugsitzes (1) bildet.

6. Fahrzeugsitz (1) nach einem der vorhergehenden Ansprüche, wobei die Sitzschale (7) den Rahmen (6) zumindest teilweise umschlingt und/oder Wangen (14) an den Seiten des Sitzteils (3) und/oder an einer vorderen Sitzkante (9) aufweist.

7. Fahrzeugsitz (1) nach einem der vorhergehenden Ansprüche, wobei die Sitzschale (7) einen oder mehrere Durchbrüche (8.1, 8.2, 8.3, 8.4) aufweist.

8. Fahrzeugsitz (1) nach Anspruch 7, wobei das Verstärkungselement (11) durch zumindest einen Teil der Durchbrüche (8.1, 8.2, 8.3, 8.4) geführt ist, so dass das Verstärkungselement (11) alternierend auf der Vorderseite (7.1) und auf der Rückseite (7.2) der Sitzschale (7) liegt.

9. Fahrzeugsitz (1) nach einem der vorhergehenden Ansprüche, wobei der Rahmen (6) im Bereich einer Rückenlehne (2) und eines Sitzteils (3) ein gebogenes erstes Rohr (17) aufweist, wobei der Rahmen (6) in einem Kopfstützenbereich (13) oben an den Bereich der Rückenlehne (2) anschließend ein gebogenes zweites Rohr (18) aufweist, das in das erste Rohr (17) eingesteckt und damit lösbar oder nicht lösbar verbunden ist.

10. Fahrzeugsitz (1) nach einem der vorhergehenden Ansprüche, wobei die Sitzschale (7) eine Rückenlehne (2), ein Sitzteil (3) und einen Kopfstützenbereich (13) des Fahrzeugsitzes (1) als voneinander abgesetzte Abschnitte bildet, die untereinander durch Verbindungsabschnitte (15) verbunden sind.

## Claims

1. Vehicle seat (1) comprising at least one frame (6) which forms an external contour of the vehicle seat (1), wherein a seat shell (7) is disposed on the frame (6) on a front side of the vehicle seat (1); wherein the seat shell (7) is formed from a thermally bonded non-woven fabric; wherein at least one reinforcing element (11) is fastened to a front seat edge (9) and to an upper seat end (10) on the frame (6), and wherein the reinforcing element (11) extends by way of at least one portion (11.1) between the front seat edge (9) and the upper seat end (10) on a front side (7.1) of the seat shell (7), and by way of at least one further portion (11.2) on a rear side (7.2) of the seat shell (7).

2. Vehicle seat (1) according to Claim 1, wherein the thermally bonded non-woven fabric has an area weight of 900 g/m² to 1800 g/m², in particular of more than 1100 g/m².

3. Vehicle seat (1) according to Claim 1 or 2, wherein the thermally bonded non-woven fabric comprises recycled polyethylene at a proportion of 70% to 100%.

4. Vehicle seat (1) according to one of the preceding claims, wherein the frame (6) forms an external contour of a backrest (2) as well as of a seat part (3) of the vehicle seat (1), and optionally of a headrest region (13).

5. Vehicle seat (1) according to one of the preceding claims, wherein the seat shell (7) forms continuously a seat part (3), a backrest (2) and a headrest region (13) of the vehicle seat (1).

6. Vehicle seat (1) according to one of the preceding claims, wherein the seat shell (7) at least partially wraps the frame (5), and/or has bolsters (14) on the sides of the seat part (3) and/or on a front seat edge (9).

7. Vehicle seat (1) according to one of the preceding claims, wherein the seat shell (7) has one or a plurality of cut-outs (8.1, 8.2, 8.3, 8.4).

8. Vehicle seat (1) according to Claim 7, wherein the reinforcing element (11) leads through at least part of the cut-outs (8.1, 8.2, 8.3, 8.4) in such a way that the reinforcing element (11) lies alternately on the front side (7.1) and on the rear side (7.2) of the seat shell (7).

9. Vehicle seat (1) according to one of the preceding claims, wherein the frame (6) in the region of a backrest (2) and of a seat part (3) has a bent first tube (17), wherein the frame (6) in a headrest region (13), so as to adjoin the region of the backrest (2) at the top, has a bent second tube (18) which is inserted into the first tube (17) and thus releasably or non-releasably connected.

10. Vehicle seat (1) according to one of the preceding claims, wherein the seat shell (7) forms a backrest (2), a seat part (3) and a headrest region (13) of the vehicle seat (1) as portions which are offset from one another and connected by connecting portions (15).

## Revendications

1. Siège de véhicule (1), comprenant au moins une ossature (6) qui forme un contour extérieur du siège de véhicule (1), une coque de siège (7) étant agencée sur l'ossature (6), sur un côté avant du siège de véhicule (1),
la coque de siège (7) étant formée d'un matériau non tissé lié thermiquement, au moins un élément de renforcement (11) étant fixé sur l'ossature (6), sur un bord avant (9) du siège et sur une extrémité supérieure (10) du siège, et l'élément de renforcement (11) s'étendant entre le bord avant (9) du siège et l'extrémité supérieure (10) du siège au moins avec une portion (11.1) située sur un côté avant (7.1) de la coque de siège (7) et s'étendant avec au moins une autre portion (11.2) sur un côté arrière (7.2) de la coque de siège (7).

2. Siège de véhicule (1) selon la revendication 1, dans lequel le matériau non tissé lié thermiquement présente un grammage compris entre 900 g/m² et 1800 g/m², notamment supérieur à 1100 g/m².

3. Siège de véhicule (1) selon la revendication 1 ou la revendication 2, dans lequel le matériau non tissé lié thermiquement comprend du polyéthylène recyclé dans une proportion allant de 70 % à 100 %.

4. Siège de véhicule (1) selon l'une des revendications précédentes, dans lequel l'ossature (6) forme un contour extérieur à la fois d'un dossier (2) et d'une partie (3) formant assise du siège de véhicule (1), et optionnellement d'une zone d'appui-tête (13).

5. Siège de véhicule (1) selon l'une des revendications précédentes, dans lequel la coque de siège (7) forme de manière continue une partie (3) formant assise, un dossier (2) et une zone d'appui-tête (13) du siège de véhicule (1).

6. Siège de véhicule (1) selon l'une des revendications précédentes, dans lequel la coque de siège (7) entoure au moins partiellement l'ossature (6) et/ou présente des joues (14) sur les côtés de la partie (3) formant assise et/ou sur un bord d'assise avant (9).

7. Siège de véhicule (1) selon l'une des revendications précédentes, dans lequel la coque de siège (7) présente un ou plusieurs ajours (8.1, 8.2, 8.3, 8.4).

8. Siège de véhicule (1) selon la revendication 7, dans lequel l'élément de renforcement (11) est guidé à travers au moins une partie des ajours (8.1, 8.2, 8.3, 8.4), de sorte que l'élément de renforcement (11) se trouve alternativement sur le côté avant (7.1) et sur le côté arrière (7.2) de la coque de siège (7).

9. Siège de véhicule (1) selon l'une des revendications précédentes, dans lequel l'ossature (6) présente, dans la zone d'un dossier (2) et d'une partie (3) formant assise, un premier tube cintré (17), l'ossature (6) présentant, dans une zone d'appui-tête (13), à la suite de la zone du dossier (2), en haut, un deuxième tube cintré (18), qui est inséré dans le premier tube (17) et relié à celui-ci de manière amovible ou non amovible.

10. Siège de véhicule (1) selon l'une des revendications précédentes, dans lequel la coque de siège (7) forme un dossier (2), une partie (3) formant assise et une zone d'appui-tête (13) du siège de véhicule (1) sous la forme de portions espacées les unes des autres, qui sont reliées entre elles par des sections de liaison (15).
